# EUROPEAN PATENT SPECIFICATION

(11) **EP 3 640 313 B1**
(45) Date of publication and mention of the grant of the patent: **15.05.2024**
(21) Application number: 18818383.4
(22) Date of filing: 11.06.2018
(51) Int. Cl.: C09K 5/04, F25B 1/00

(54) **COMPOSITION CONTAINING REFRIGERANT, USE OF SAME, FREEZING METHOD USING SAME, AND FREEZING MACHINE INCLUDING SAME**
ZUSAMMENSETZUNG MIT KÜHLMITTEL, VERWENDUNG DAVON, GEFRIERVERFAHREN DAMIT UND GEFRIERMASCHINE DAMIT
COMPOSITION CONTENANT UN FLUIDE FRIGORIGÈNE, SON UTILISATION, PROCÉDÉ DE CONGÉLATION UTILISANT LADITE COMPOSITION ET MACHINE DE CONGÉLATION COMPRENANT LADITE COMPOSITION

(30) Priority: 12.06.2017 JP 2017115256
(43) Date of publication of application: 22.04.2020
(73) Proprietor: Daikin Industries, Ltd., Osaka-shi, Osaka 530-0001 (JP)
(72) Inventor: ITANO, Mitsushi, Osaka-shi, Osaka 5300001 (JP); OHKUBO, Shun, Osaka-shi, Osaka 5300001 (JP); KUROKI, Hitomi, Osaka-shi, Osaka 5300001 (JP); TSUCHIYA, Tatsumi, Osaka-shi, Osaka 5300001 (JP); GOBOU, Kenji, Osaka-shi, Osaka 5300001 (JP)
(74) Representative: Hoffmann Eitle
(86) International application number: PCT/JP2018/022275
(87) International publication number: WO 2018/230515

(56) References cited:
- WO-A1-2015/125874
- WO-A1-2016/059698
- WO-A1-2016/114217
- JP-A- 2012 509 390
- JP-A- 2015 172 182
- JP-A- 2015 180 724
- JP-B1- 5 783 341
- US-A1- 2016 333 244

## Description

### Technical Field

The present invention relates to a composition containing a refrigerant, use of the composition, a refrigeration method using the composition, and a refrigerating machine containing the composition.

### Background Art

Fluorinated hydrocarbons (hydrofluorocarbons or HFCs) that contain no chlorine in their molecular structure, such as difluoromethane (CH₂F₂, HFC-32, R32), pentafluoroethane (CF₃CHF₂, HFC-125, R125), 1,1,1-trifluoroethane (CF₃CH₃, HFC-143a, R143a), 1,1,1,2-tetrafluoroethane (CF₃CH₂F, HFC-134a, R134a), 1,1-difluoroethane (CHF₂CH₃, HFC-152a, R152a), and 2,3,3,3-tetrafluoropropene (CF₃CF=CH₂, HFO-1234yf, R1234yf), have been used in refrigerants for air conditioners, refrigerating machines and refrigerators.

A variety of mixed refrigerants of these fluorinated hydrocarbons are also proposed to be used. For example, a three-component mixed refrigerant containing R32, R125, and R134a in a composition ratio of 23/25/52 on a mass% basis is used under the name of R407C. A three-component mixed refrigerant containing R125, R143a, and HFC-134a in a composition ratio of 44/52/4 on a mass% basis is also used under the name of R404A. Of these, R404A, in particular, has been widely used as a refrigerant for freezing and refrigerating storage (e.g., JP-A-1997-324175 and US-A-2010/0019190) .

However, R404A has a very high global warming potential (GWP) of 3922; this GWP value is as high as that of chlorodifluoromethane (CHClF₂, HCFC22, R22), which belongs to fluorinated hydrocarbons containing chlorine in their molecular structure (hydrochlorofluorocarbons, HCFCs), and which was used as a refrigerant for freezing and refrigerating storage before R404A was proposed.

Although many refrigerating machines that use HCFC22 still remain, advanced countries are under pressure to completely abolish the use of HCFC by 2020 under the Montreal Protocol. Developing countries have also been required to gradually reduce the use of HCFC.

Alternative refrigerants for R404A that have been proposed so far include the refrigerants disclosed in WO 2010/059677 and JP-A-2013-529703.

US-A_2016/0333244 discloses a working fluid for heat cycle, which contains trifluoroethylene (R1123), R1234yf and R32, wherein the proportion of the total amount of R1123, R1234yf and R32 based on the entire working fluid is > 90 mass %, and based on the total amount of R1123, R1234yf and R32, the proportion of R1123 is 10 to < 70 mass %, the proportion of R1234yf is ≤ 50 mass %, and the proportion of R32 is > 30 to 75 mass %.

EP-A-3 208 555 (WO 2016/059698) describes a refrigeration cycle apparatus comprising (i) a refrigerant circuit in which a high pressure shell compressor, a condenser, an expansion mechanism and an evaporator are connected; (ii) a mixed refrigerant circulating through the circuit and containing R1123, R32 and R1234yf, wherein, prior to introduction into the circuit, the mixing ratio of R1123 is < 50wt% and that of R32 is 0.7-2 times the mixing ratio of R1123, and (iii) a refrigerating machine oil enclosed in the refrigerant circuit and prepared such that among the R32, R1123 and R1234yf the R32 is least soluble therein.

### Summary of Invention

### Technical Problem

The present inventors performed independent evaluation of mixed refrigerants that have been proposed as alternative refrigerants for R404A. Specifically, the inventors made comprehensive evaluation on (1) various properties usually required of refrigerants, i.e., a low GWP, stability, and minimized temperature glide, and (2) essential properties required of alternative refrigerants for R404A such that the refrigerating capacity, compressor outlet pressure, and coefficient of performance (COP) should be substantially equivalent to those of R404A. As a result, the inventors found that there is still room for improvement. The inventors further clarified through their own study that these properties sometimes correlate to each other and improving the balance between these properties entails difficulties. An object of the present invention is to solve this unique problem.

### Solution to Problem

The present inventors conducted extensive research to achieve the object, and found that the object can be achieved by the use of a mixed refrigerant containing R32, trifluoroethylene (R1123), and R1234yf in a specific ratio.

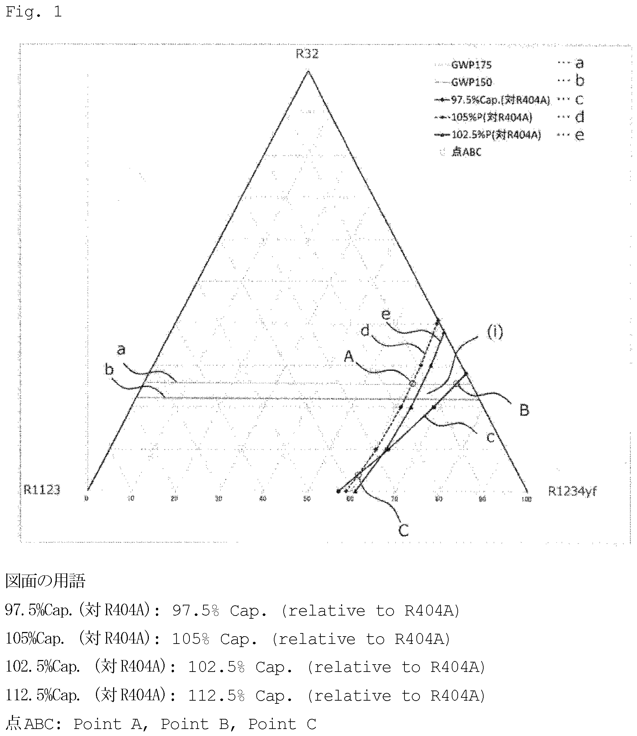

The inventors conducted further research based on this finding, and completed the present invention. Thus the present invention provides a composition comprising a refrigerant comprising R32, R1123 and R1234yf, wherein the three components have a mass ratio that falls within a region surrounded by lines a, c, and d, which connect points A, B and C in a ternary composition diagram of Fig. 1 whose vertices represent the three components:
A: (R32/R1123/R1234yf = 25.6/13.4/61.0 mass%);
B: (R32/R1123/R1234yf = 25.6/3.4/71.0 mass%); and
C: (R32/R1123/R1234yf = 3.9/36.5/59.6 mass%).

Also, the invention provides (i) the use of the above composition as a refrigerant, (ii) a refrigeration method comprising operating a refrigeration cycle using the above composition and (iii) a refrigerating machine comprising the above composition.

Preferred embodiments of the invention are as defined in the appended dependent claims and/or in the following detailed description.

### Advantageous Effects of Invention

The composition of the present invention (also referred to as "the present composition" hereinafter) is comprehensively superior to existing mixed solvents in (1) various properties usually required of refrigerants, i.e., a low GWP, stability, and minimized temperature glide, as well as (2) essential properties required of alternative refrigerants for R404A such that refrigerating capacity, compressor outlet pressure, and COP should be substantially equivalent to those of R404A.

### Brief Description of Drawings

Fig. 1 shows the formulation of mixed refrigerants of the invention (region (i) surrounded by lines a, c, and d, which connect points A, B, and C indicated by circles (o)) in a ternary composition diagram of R32, R1123, and R1234yf.
Fig. 2 shows the formulation of mixed refrigerants of the invention (region (ii) surrounded by lines a, c, and e, which connect points D, B, and E indicated by circles (o)) in a ternary composition diagram of R32, R1123, and R1234yf.
Fig. 3 shows the formulation of mixed refrigerants of the invention (region (iii) surrounded by lines b, c, and e, which connect points F, G, and E indicated by circles (o)) in a ternary composition diagram of R32, R1123, and R1234yf.

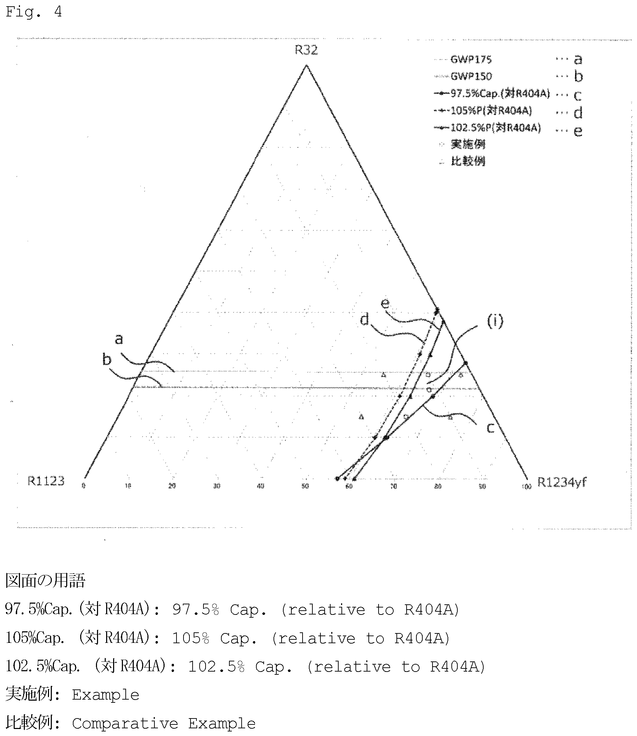

Fig. 4 shows the formulation of mixed refrigerants of the present Examples (indicated by circles (o)) and the formulation of mixed refrigerants according to the Comparative Examples (indicated by triangles (Δ)), and region (i) surrounded by lines a, c, and d, which connect points A, B, and C.
Fig. 5 is a schematic diagram showing an embodiment of a countercurrent heat exchanger.
Fig. 6 is a schematic diagram showing an embodiment of a countercurrent heat exchanger; (A) is a top view, and (b) is a perspective view.

### Description of Embodiments

### Definition of Terms

Herein, the term "refrigerant" includes at least compounds that are specified in ISO817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon-based compounds and non-fluorocarbon-based compounds in terms of the structure of the compounds. Fluorocarbon-based compounds include chlorofluorocarbons (CFC), hydrochlorofluorocarbons (HCFC), and hydrofluorocarbons (HFC). Examples of non-fluorocarbon-based compounds include propane (R290), propylene (R1270), butane (R600), isobutane (R600a), carbon dioxide (R744) and ammonia (R717).

Herein, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of refrigerant oil, gasket, packing, expansion valve, dryer, other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

Herein, the term "refrigerating machine" in the broad sense refers to machines in general that draw heat from an object or space to make its temperature lower than the temperature of ambient air, and maintain a low temperature. In other words, refrigerating machines in the broad sense refer to conversion machines that gain energy from the outside to do work, and that perform energy conversion, in order to transfer heat from where the temperature is lower to where the temperature is higher. Herein, "refrigerating machine" is synonymous with "heat pump" in the broad sense.

Herein, the term "refrigerating machine" is distinguished from "heat pump" in the narrow sense, depending on the difference in the applied temperature range and operating temperature. In this case, a machine whose low-temperature heat source is placed in a temperature range lower than air temperature may be called a "refrigerating machine," while a machine whose low-temperature heat source is placed around air temperature to use the heat-release action caused by driving the refrigeration cycle may be called a "heat pump." Additionally, there are machines that have both the function of refrigerating machines in the narrow sense and the function of heat pumps in the narrow sense, despite them being a single machine; for example, air conditioners that provide both a cooling mode and a heating mode. In the present specification, unless otherwise indicated, the terms "refrigerating machine" and "heat pump" are used in the broad sense throughout the specification.

Herein, "countercurrent" means that the refrigerant in the heat exchanger flows in a direction opposite to the flow direction of the external heat medium. In other words, the refrigerant flows from the downstream side to the upstream side in the flow direction of the external heat medium, and this flow is distinguished from parallel flow in which the refrigerant flows in the forward direction with respect to the flow direction of the external heat medium (the flow in which the refrigerant flows from the upstream side to the downstream side in the flow direction of the external heat medium).

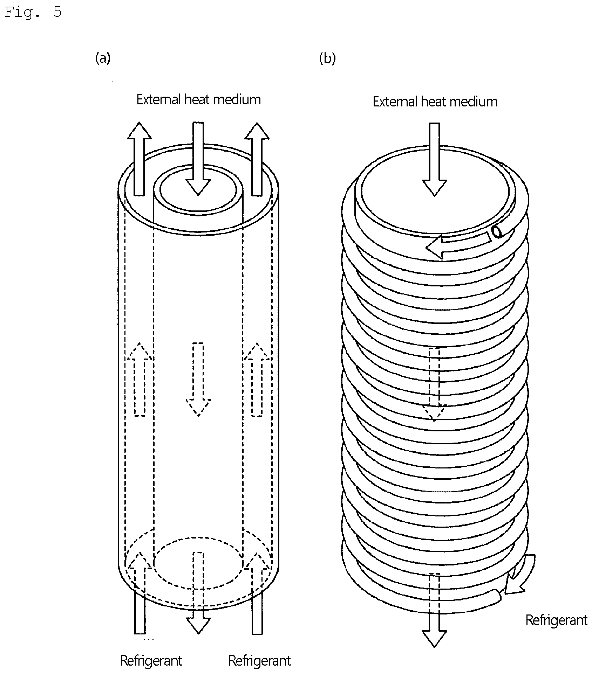

More specifically, when the external heat medium is water, a double-pipe heat exchanger, such as the one shown in Fig. 5(a), may be used as the heat exchanger, in which, for example, the external heat medium is allowed to flow from a first end to a second end (in the figure, from the upper end to the lower end) in an inner pipe P1, and the refrigerant is allowed to flow from the second end to the first end (in the figure, from the lower end to the upper end) in an outer pipe P2, so that the refrigerant and the external heat medium can flow countercurrent to each other. Alternatively, when using a heat exchanger in which a helix tube P4 is wound around the circumference surface of a cylindrical tube P3, such as the one shown in Fig. 5(b), for example, the external heat medium is allowed to flow from a first end to a second end (in the figure, from the upper end to the lower end) in the cylindrical tube P3, and the refrigerant is allowed to flow from the second end to the first end (in the figure, from the lower end to the upper end) in the helix tube P4, so that the refrigerant and the external heat medium can flow countercurrent to each other. Further, although it is not shown in the figures, any known heat exchanger in which the refrigerant flows countercurrent to the external heat medium, such as a plate heat exchanger, can also be used.

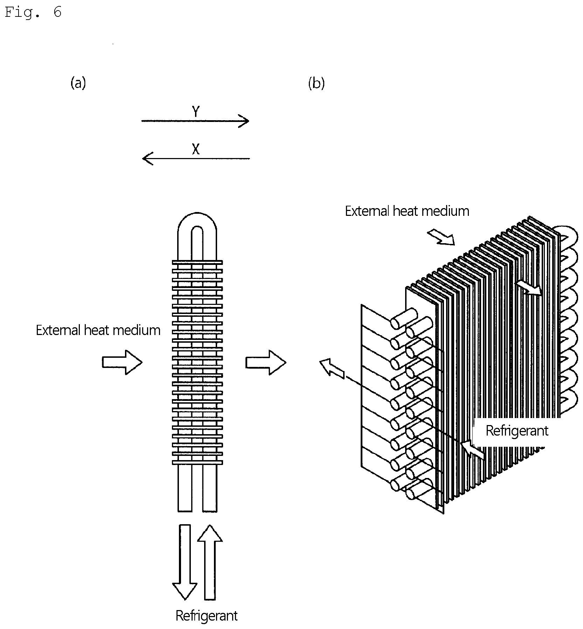

Further, when the external heat medium is air, a finned tube heat exchanger, such as the one shown in Fig. 6, can be used. A finned tube heat exchanger has a plurality of fins F provided in parallel at predetermined intervals and a heat-transfer tube P5 that runs in a serpentine manner in a plan view. A plurality of (two in Fig. 6) linear portions provided in parallel to constitute the heat-transfer tube P5 penetrate through the plurality of fins F. One of the two ends of the heat-transfer tube P5 serves as the inflow port for the refrigerant, while the other serves as the outflow port for the refrigerant. The refrigerant is allowed to flow from the downstream side to the upstream side in an air distribution direction Y, as shown by the arrow X, so that the refrigerant and external heat medium can flow countercurrent to each other.

As described above, a refrigeration cycle in which temperature change (temperature glide) occurs upon evaporation and condensation is called a "Lorentz cycle." Although in the Lorentz cycle, the difference in the temperature of the refrigerants during evaporation and condensation is reduced since the evaporator and condenser each serving as heat exchangers is a countercurrent heat exchanger, a temperature difference large enough to efficiently transfer heat between the refrigerant and the external heat medium is maintained, thereby enabling efficient heat exchange. Another advantage of a cooling system having countercurrent heat exchangers is the minimum pressure difference. As described above, such a cooling system having a countercurrent heat exchanger is capable of improving energy efficiency and/or capacity, compared with known systems.

### 1. Composition

The present composition comprises a refrigerant, and may further optionally comprise other components.

### 1.1 Refrigerant

The refrigerant contained in the present composition comprises R32, R1123, and R1234yf.

These three components have a mass ratio that falls within the region surrounded by lines a, c, and d, which connect the points A, B and C in a ternary composition diagram of Fig. 1 whose vertices represent the three components:
A (R32/R1123/R1234yf = 25.6/13.4/61.0 mass%);
B (R32/R1123/R1234yf = 25.6/3.4/71.0 mass%); and
C (R32/R1123/R1234yf = 3.9/36.5/59.6 mass%).

In Fig. 1, points A, B and C, which are indicated by circles (o), have the coordinates described above.

Point A and point B are both on straight line a. A mixed refrigerant in a composition ratio on straight line a has a GWP of 175. A mixed refrigerant in a composition ratio within the region on the lower side of this line has a GWP of < 175.

Straight line a is obtained as follows.

Table 1 shows point a_{R1234yf=0}, at which the concentration of R1234yf is 0 mass% and the GWP is 175, and point a_{R1123=0}, at which the concentration of R1123 is 0 mass% and the GWP is 175. Straight line a is indicated by a line connecting point a_{R1234yf=0} and point a_{R1123=0}. When the mass% of R32 = x, the mass% of R1123 = y, and the mass% of R1234yf = z, the straight line a is approximated by the equations shown in Table 1 by using the least squares method.

**Table 1**

| Item | Unit | a_{R1234yf=0} | a_{R1123=0} |
|---|---|---|---|
| R32 | mass% | 25.8 | 25.5 |
| R1123 | mass% | 74.3 | 0.0 |
| R1234yf | mass% | 0.0 | 74.5 |
| GWP | Year | 175 | 175 |
| x = R32 | mass% | Equations of line a | |
| y = R1123 | mass% | y = 247.333x - 6307 | |
| z = R1234yf | mass% | z = 100 - x - y | |

Point B and point C are both on curve c. A mixed refrigerant in a composition ratio on curve c has a refrigerating capacity of 97.5% relative to R404A. A mixed refrigerant in a composition ratio that falls within the region on the left side of this line has a refrigerating capacity of > 97.5% relative to R404A.

Curve c is obtained as follows.

Table 2 shows four points at which the refrigeration capacity ratio relative to R404A is 97.5 mass% when the amount of R32 is 0, 10.0, 20.0, or 28.0 mass%. The curve c is shown by a curve connecting these 4 points. When the mass% of R32 = x, the mass% of R1123 = y, and the mass% of R1234yf = z, the curve c is approximated by the equations shown in Table 2 by using the least squares method.

**Table 2**

| Item | Unit | d_{R32=0} | d_{R32=10} | d_{R32=20} | d_{R32=28} |
|---|---|---|---|---|---|
| R32 | mass% | 0.0 | 10.0 | 20.0 | 28.0 |
| R1123 | mass% | 43.0 | 26.7 | 11.4 | 0.0 |
| R1234yf | mass% | 57.0 | 63.3 | 68.6 | 72.0 |
| Refrigerating capacity | relative to 404A (%) | 97.5 | 97.5 | 97.5 | 97.5 |
| x = R32 | mass% | Equations of curve c | | | |
| y = R1123 | mass% | y = 0.0054 x 2 - 1.6864x + 43.007 | | | |
| z = R1234yf | mass% | z = 100 - x - y | | | |

Point A and point C are both on curve d. A mixed refrigerant in a composition ratio on curve d has a compressor outlet pressure of 105% relative to R404A. A mixed refrigerant in a composition ratio that falls within the region on the right side of this line has a compressor outlet pressure of < 105% relative to R404A.

Curve d is obtained as follows.

Table 3 shows 4 points at which the compressor outlet pressure ratio relative to R404A is 105.0 mass% when the amount of R32 is 0, 10.0, 20.0, or 30.0 mass%. Curve d is shown as a curve connecting these 4 points. When the mass% of R32 = x, the mass% of R1123 = y, and the mass% of R1234yf = z, curve c is approximated by the equations shown in Table 3 using the least squares method.

**Table 3**

| Item | Unit | d_{R32=0} | d_{R32=10} | d_{R32=20} | d_{R32=30} |
|---|---|---|---|---|---|
| R32 | mass% | 0.0 | 10.0 | 20.0 | 30.0 |
| R1123 | mass% | 41.2 | 29.4 | 18.8 | 9.3 |
| R1234yf | mass% | 58.8 | 60.6 | 61.2 | 60.7 |
| Compressor outlet pressure | relative to 404A (%) | 105.0 | 105.0 | 105.0 | 105.0 |
| x = R32 | mass% | Equations of curve d | | | |
| y = R1123 | mass% | y = 0.0058 x 2 - 1.2355x + 41.195 | | | |
| z = R1234yf | mass% | z = 100 - x - y | | | |

Thus, a ternary mixed refrigerant comprising R32, R1123, and R1234yf in a composition ratio within the region surrounded by 3 points (points A, B, C) (ABC region) has a GWP of ≤ 175, a refrigerating capacity of ≥ 97.5% relative to R404A, and a compressor outlet pressure ratio of ≤ 105% relative to 404A.

Thus, a ternary mixed refrigerant having a composition ratio that fall within the ABC region (ABC ternary mixed refrigerant) is a low-GWP refrigerant and has a compressor outlet pressure (i.e., the maximum pressure in a refrigeration cycle) equivalent to that of R404A, as well as refrigerating capacity; therefore, the ABC ternary mixed refrigerant is suitable for use as an alternative refrigerant for R404A.

An ABC ternary mixed refrigerant has a temperature glide that is, however, reduced to a relatively low level. Specifically, the evaporation glide is ≤ 8°C, and more preferably ≤ 5°C. Accordingly, the present mixed refrigerant is suitable for use in a refrigerating machine having a heat exchanger in which the refrigerant flows countercurrent to the flow of the external heat medium.

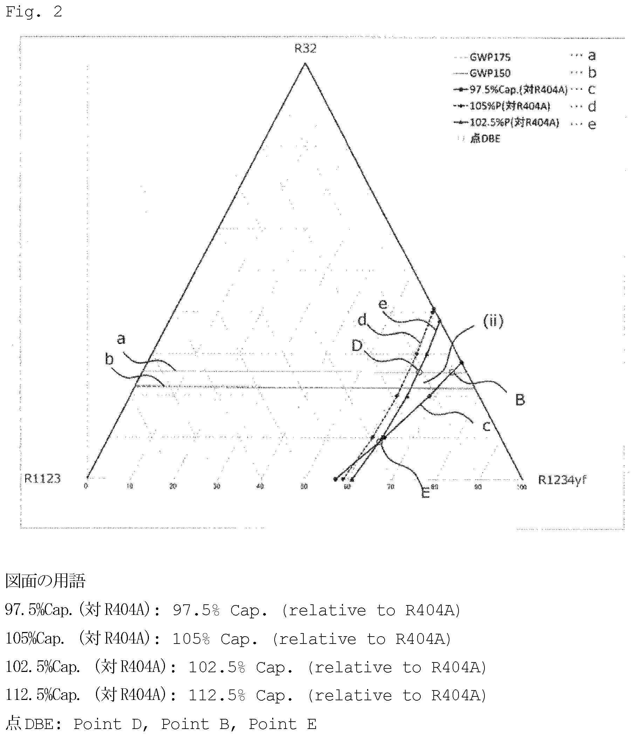

The ternary mixed refrigerant comprising R32, R1123, and R1234yf preferably has a mass ratio of these three components that falls within the region (ii) surrounded by lines a, c, and e, which connect points D, B and E in a ternary composition diagram of Fig. 2 whose vertices represent the three components:
D (R32/R1123/R1234yf = 25.6/11.0/63.4 mass%);
B (R32/R1123/R1234yf = 25.6/3.4/71.0 mass%); and
E (R32/R1123/R1234yf = 9.0/28.3/62.7 mass%).

Point D and point B are both on curve a. A mixed refrigerant in a composition ratio on curve a has a GWP of 175. A mixed refrigerant having a composition ratio within the region on the lower side of this line has a GWP of < 175.

Point B and point E are both on curve c. A mixed refrigerant in a composition ratio on curve c has a refrigerating capacity of 97.5% relative to R404A. A mixed refrigerant having a composition ratio within the region on the left side of this line has a refrigerating capacity of > 97.5% relative to R404A.

Point D and point E are both on curve e. A mixed refrigerant in a composition ratio on curve e has a compressor outlet pressure of 102.5% relative to R404A. A mixed refrigerant having a composition ratio within the region on the right side of this line has a compressor outlet pressure of < 102.5%.

Curve e is obtained in in the following manner.

Table 4 shows four points at which the compressor outlet pressure ratio relative to R404A is 102.5 mass% when the amount of R32 is 0, 10.0, 20.0, or 28.0 mass%. Curve d is shown by a curve connecting these 4 points. When the mass% of R32 = x, the mass% of R1123 = y, and the mass% of R1234yf = z, curve c is approximated by the equations shown in Table 4 by using the least squares method.

**Table 4**

| Item | Unit | d_{R32=0} | d_{R32=10} | d_{R32=20} | d_{R32=30} |
|---|---|---|---|---|---|
| R32 | mass% | 0.0 | 10.0 | 20.0 | 30.0 |
| R1123 | mass% | 39.1 | 27.2 | 16.5 | 7.0 |
| R1234yf | mass% | 60.9 | 62.8 | 63.5 | 63.0 |
| Compressor outlet pressure | relative to 404A (%) | 102.5 | 102.5 | 102.5 | 102.5 |
| x = R32 | mass% | Equations of curve e | | | |
| y = R1123 | mass% | y = 0.006 x 2 - 1.25x + 39.1 | | | |
| z = R1234yf | mass% | z = 100 - x - y | | | |

Thus, a ternary mixed refrigerant having a composition ratio within the region surrounded by lines that connect three points (points D, B, and E) (DBE region), has a GWP of ≤ 175, a refrigerating capacity of ≥ 97.5% relative to R404A, and a compressor outlet pressure of ≤ 102.5% relative to R404A. Accordingly, a ternary mixed refrigerant having a composition ratio within the DBE region (DBE ternary mixed refrigerant) is suitable for use as an alternative refrigerant for R404A, while being a low-GWP refrigerant, as compared with the ABC ternary mixed refrigerant.

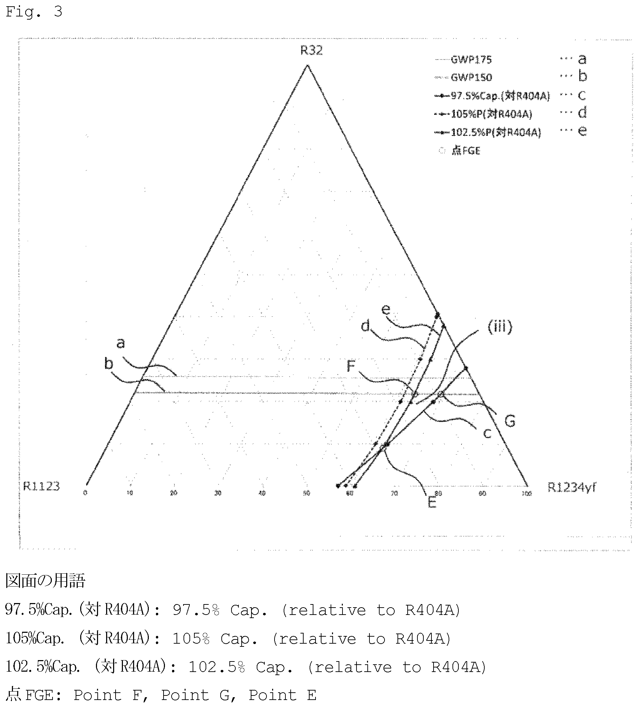

The ternary mixed refrigerant comprising R32, R1123, and R1234yf preferably has a mass ratio of these three components that falls within the region (iii) surrounded by lines b, c, and e, which connect points F, G and E in a ternary composition diagram of Fig. 3 whose vertices represent the three components:
F (R32/R1123/R1234yf = 21.8/14.7/63.5 mass%);
G (R32/R1123/R1234yf = 21.8/8.8/69.4 mass%); and
E (R32/R1123/R1234yf = 9.0/28.3/62.7 mass%).

Point F and point G are both on curve f. A mixed refrigerant in a composition ratio on curve b has a GWP of 150. A mixed refrigerant in a composition ratio on straight line a has a GWP of < 150. A mixed refrigerant in a composition ratio within the region on the lower side of this line has a GWP of < 150.

Straight line b is obtained as follows.

Table 5 shows point b_{R1234yf=0}, at which the concentration of R1234yf is 0 mass% and the GWP is 150, and point b_{R1123=0}, at which the concentration of R1123 is 0 mass% and the GWP is 150. Straight line b is indicated by a line connecting point d_{R1234yf=0} and point D_{R1123=0}. When the mass% of R32 = x, the mass% of R1123 = y, and the mass% of 1234yf = z, straight line b is approximated by the equations shown in Table 5 by using the least squares method.

**Table 5**

| Item | Unit | b_{1234yf=0} | D_{R1123=0} |
|---|---|---|---|
| R32 | mass% | 22.1 | 21.8 |
| R1123 | mass% | 77.8 | 0.0 |
| R1234yf | mass% | 0.0 | 78.2 |
| GWP | years | 150 | 150 |
| x = R32 | mass% | Equations of curve b | |
| y = R1123 | mass% | y = 259.667x - 5660.741 | |
| z = R1234yf | mass% | z = 100 - x - y | |

Point G and point H are both on curve c. A mixed refrigerant in a composition ratio on curve c has a refrigerating capacity of 97.5% relative to R404A. A mixed refrigerant having a composition ratio within the region on the left side of curve c has a refrigerating capacity of > 97.5% relative to R404A.

Point d and point E are both on curve e. A mixed refrigerant in a composition ratio on curve e has a refrigerating capacity of 102.5% relative to R404A. A mixed refrigerant having a composition ratio within the region on the right side of curve e has a compressor outlet pressure of < 102.5% relative to R404A.

Accordingly, a ternary mixed refrigerant comprising R32, R1123 and R1234yf, which has a composition ratio within the region (FGE region) surrounded by the lines connecting the three points F, G, and E respectively, has a GWP of ≤ 150, and has a refrigerating capacity of ≥ 97.5% relative to R404A, and a compressor outlet pressure of ≤ 102.5% relative to R404A. Therefore, a ternary mixed refrigerant having a composition ratio within the FGE region (FGE ternary mixed refrigerant) has a lower GWP refrigerant than the ABC ternary mixed refrigerant or the DBE ternary mixed refrigerant, and is more suitable for use as an alternative refrigerant for R404A than the ABC ternary mixed refrigerant.

These mixed refrigerant may further comprise one or more other refrigerants in addition to R32, R1123, and R1234yf, as long as the above characteristics of the ternary mixed refrigerant comprising R32, R1123, and R1234yf are not impaired. From this viewpoint, the mixed refrigerant preferably comprises R32, R1123, and R1234yf in a total amount of ≥ 99.5 mass%, based on the entire mixed refrigerant. In this case, the mixed refrigerant comprises such additional refrigerants in a total amount of ≤ 0.5 mass% of the entire mixed refrigerant. From the same viewpoint, the mixed refrigerant more preferably comprises R32, R1123, and R1234yf in a total amount of ≥ 99.75 mass%, and still more preferably ≥ 99.9 mass% of the entire mixed refrigerant.

Such additional refrigerants are not limited, and can be selected from a wide range of refrigerants. The mixed refrigerant may comprise a single additional refrigerant, or two or more additional refrigerants.

### 1.2 Other Components

The present composition contains a refrigerant and may further optionally contain at least one of the following other components.

### 1.2.1. Water

The present composition may contain a small amount of water. The water content in the composition is preferably ≤ 0.1 parts by mass (pbm), per 100 pbm of the refrigerant. A small amount of water contained in the composition stabilizes double bonds in the molecules of unsaturated fluorocarbon-based compounds that can be present in the refrigerant, and makes it less likely that the unsaturated fluorocarbon-based compounds will be oxidized, thus increasing the stability of the composition.

### 1.2.2. Refrigerant Oil

The present composition may comprise a single refrigerant oil, or two or more refrigerant oils.

The refrigerant oil is not limited, and can be suitably selected from typically used refrigerant oils. In this case, refrigerant oils that are superior in increasing action on the miscibility with the mixture and stability of the mixture, for example, are suitably selected as necessary.

The refrigerant oil is preferably, for example, at least one selected from polyalkylene glycols (PAG), polyol esters (POE), and polyvinyl ethers (PVE).

A refrigerant oil with a kinematic viscosity of 5-400 mm²/s (5-400 cSt) at 40°C is preferable from the standpoint of lubrication.

The content of the refrigerant oil is not limited, and is typically 10-50 mass%, based on the entire composition.

The present composition may further optionally comprise at least one additive. Examples of additives include those described below.

### 1.2.3. Tracer

A tracer is added to the present composition at a detectable concentration such that when the composition has been diluted, contaminated, or undergone other changes, the tracer can trace the changes. The present composition may comprise a single tracer, or two or more tracers. The tracer is not limited, and can be suitably selected from typically used tracers.

Examples of tracers include hydrofluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon or a fluoroether.

### 1.2.4. Compatibilizing Agent

The present composition may comprise a single compatibilizing agent, or two or more compatibilizing agents. The compatibilizing agent is not limited, and can be suitably selected from typically used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkane. The compatibilizing agent is particularly preferably a polyoxyalkylene glycol ether.

### 1.2.5. Ultraviolet Fluorescent Dye

The present composition may comprise a single ultraviolet fluorescent dye, or two or more ultraviolet fluorescent dyes. The ultraviolet fluorescent dye is not limited, and can be suitably selected from typically used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 1.2.6. Stabilizer

The present composition may comprise a single stabilizer, or two or more stabilizers. The stabilizer is not limited, and can be suitably selected from typically used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenyl amine.

Examples of stabilizers also include butylhydroxyxylene and benzotriazole.

The content of the stabilizer is not limited. Typically, the content of the stabilizer is preferably 0.01-5 pbm, and more preferably 0.05-2 pbm, per 100 pbm of the refrigerant.

### 1.2.7. Polymerization Inhibitor

The present composition may comprise a single polymerization inhibitor, or two or more polymerization inhibitors. The polymerization inhibitor is not limited, and can be suitably selected from typically used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol and benzotriazole.

The content of the polymerization inhibitor is not limited. Typically, the content of the polymerization inhibitor is preferably 0.01-5 pbm, and more preferably 0.05-2 pbm, per 100 pbm of the refrigerant.

### 2. Use

The present composition is usable as a refrigerant, and is suitable for use, in particular, as a refrigerant for refrigerating machines.

The refrigerating machine is not limited. Examples of refrigerating machines include refrigerators, freezers, water coolers, ice makers, refrigerating showcases, freezing showcases, freezing and refrigerating units, refrigerating machines for freezing and refrigerating warehouses, chillers (chilling units), turbo refrigerators, and screw refrigerators.

The present composition is suitable for use in a refrigerator comprising a heat exchanger in which the refrigerant flows countercurrent to the flow of an external heat medium because the present composition contains a mixed refrigerant having a temperature glide.

The present composition is suitable for use as an alternative refrigerant for R404A.

### 3. Refrigeration Method

A target object can be frozen using the present composition by a method comprising operating a refrigeration cycle. For example, the refrigeration cycle can be structured by circulating the present composition via a compressor.

It is also possible to structure an apparatus for refrigeration cycle in which the present composition is circulated via a compressor.

### Examples

The present invention is described in more detail below with reference to Examples.

The GWP of compositions each comprising R404A or a mixture of R32, R1123, and 1234yf was evaluated based on the values stated in the Intergovernmental Panel on Climate Change (IPCC), fourth report. The refrigerating capacity of compositions each comprising R404A or a mixture of R32, R1123, and 1234yf was determined by performing theoretical refrigeration cycle calculations for the refrigerant and mixed refrigerants using the National Institute of Science and Technology (NIST) and Reference Fluid Thermodynamic and Transport Properties Database (Refprop 9.0) under the following conditions.
Evaporation temperature: -40°C
Condensation temperature: 40°C
Superheating temperature: 20 K
Supercooling temperature: 0 K
Compressor efficiency: 70%

Tables 6-10 show the GWP as well as the COP, refrigerating capacity, and compressor outlet pressure (discharge pressure) each relative to R404A, which were calculated based on these results. The coefficient of performance (COP) was determined in accordance with the following formula. COP = (refrigerating capacity or heating capacity) /power consumption

**Table 6**

| Item | Unit | Comp. Ex. | Comp. Ex. 1 | Example 1 | Example 2 | Example 3 | Comp. Ex. 2 | Comp. Ex. 3 | Example 4 | Example 5 | Comp. Ex. 4 |
|---|---|---|---|---|---|---|---|---|---|---|---|
| | | | a_{R1234yf=0} | A | D | B | a_{R1123=0} | b_{R1234yf=0} | F | G | b_{R1123=0} |
| R32 | mass% | R404A | 25.8 | 25.6 | 25.6 | 25.6 | 25.5 | 22.1 | 21.8 | 21.8 | 21.8 |
| R1123 | mass% | | 74.2 | 13.4 | 11.0 | 3.4 | 0.0 | 77.9 | 14.7 | 8.8 | 0.0 |
| R1234yf | mass% | | 0.0 | 61.0 | 63.4 | 71.0 | 74.5 | 0.0 | 63.5 | 69.4 | 78.2 |
| GWP | years | 3922 | 175 | 175 | 175 | 175 | 175 | 150 | 150 | 150 | 150 |
| Relative COP | % | 100.0 | 96.8 | 105.8 | 106.3 | 108.0 | 108.7 | 95.9 | 105.2 | 106.5 | 108.5 |
| Relative refrigerating capacity | % | 100.0 | 187.7 | 109.3 | 106.5 | 97.5 | 93.5 | 186.3 | 104.4 | 97.5 | 87.5 |
| Relative discharge pressure | % | 100.0 | 168.5 | 105.0 | 102.5 | 93.9 | 89.9 | 169.0 | 102.5 | 95.8 | 85.8 |

**Table 7**

| Item | Unit | Comp. Ex. | Comp. Ex. 5 | Example 6 | Example 7 | Example 8 | Example 9 | Comp. Ex. 6 |
|---|---|---|---|---|---|---|---|---|
| | | | c_{R32=0} | C | E | c_{R32=10} | c_{R32=20} | c_{R32=28} |
| R32 | mass% | R404A | 0.0 | 3.9 | 9.0 | 10.0 | 20.0 | 28.0 |
| R1123 | mass% | | 43.0 | 36.5 | 28.3 | 26.7 | 11.4 | 0.0 |
| R1234yf | mass% | | 57.0 | 59.6 | 62.7 | 63.3 | 68.6 | 72.0 |
| GWP | years | 3922 | 3 | 29 | 64 | 70 | 138 | 192 |
| Relative COP | % | 100.0 | 96.9 | 98.8 | 101.1 | 101.6 | 105.8 | 108.9 |
| Relative refrigerating capacity | % | 100.0 | 97.5 | 97.5 | 97.5 | 97.5 | 97.5 | 97.5 |
| Relative discharge pressure | % | 100.0 | 107.0 | 105.0 | 102.4 | 101.9 | 96.7 | 92.6 |

**Table 8**

| Item | Unit | Comp. Ex. | Comp. Ex. 7 | Example 10 | Example 11 | Comp. Ex. 8 | Comp. Ex. 9 | Comp. Ex. 10 |
|---|---|---|---|---|---|---|---|---|
| | | | d_{R32=0} | d_{R32=10} | d_{R32=20} | d_{R32=30} | d_{R32=40} | d_{R32=40.8} |
| R32 | mass% | R404A | 0.0 | 10.0 | 20.0 | 30.0 | 40.0 | 40.8 |
| R1123 | mass% | | 41.2 | 29.4 | 18.8 | 9.3 | 0.7 | 0.0 |
| R1234yf | mass% | | 58.8 | 60.6 | 61.2 | 60.7 | 59.3 | 59.2 |
| GWP | years | 3922 | 3 | 70 | 138 | 205 | 272 | 278 |
| Relative COP | % | 100.0 | 97.3 | 101.0 | 104.2 | 106.9 | 109.2 | 109.4 |
| Relative refrigerating capacity | % | 100.0 | 95.4 | 100.7 | 106.2 | 111.6 | 116.7 | 117.1 |
| Relative discharge pressure | % | 100.0 | 105.0 | 105.0 | 105.0 | 105.0 | 105.0 | 105.0 |

**Table 9**

| Item | Unit | Comp. Ex. | Comp. Ex. 11 | Example 12 | Example 13 | Comp. Ex. 12 | Comp. Ex. 13 |
|---|---|---|---|---|---|---|---|
| | | | e_{R32=0} | e_{R32=10} | e_{R32=20} | e_{R32=3} | e_{R32}=38.1 |
| R32 | mass% | R404A | 0.0 | 10.0 | 20.0 | 30.0 | 38.1 |
| R1123 | mass% | | 39.1 | 27.2 | 16.5 | 7.0 | 0.0 |
| R1234yf | mass% | | 60.9 | 62.8 | 63.5 | 63.0 | 61.9 |
| GWP | Years | 3922 | 4 | 71 | 138 | 205 | 260 |
| Relative COP | % | 100.0 | 97.7 | 101.5 | 104.7 | 107.4 | 109.3 |
| Relative refrigerating capacity | % | 100.0 | 93.0 | 98.1 | 103.4 | 108.9 | 113.1 |
| Relative discharge pressure | % | 100.0 | 102.5 | 102.5 | 102.5 | 102.5 | 102.5 |

**Table 10**

| Item | Unit | Comp. Ex. | Example 14 | Example 15 | Example 16 | Comp. Ex. 14 | Comp. Ex. 15 | Comp. Ex. 16 | Comp. Ex. 17 |
|---|---|---|---|---|---|---|---|---|---|
| | | | Within ΔDBE | Within ΔFGE | Within ΔFGE | Outside ΔARC | Outside ΔARC | Outside ΔARC | Outside ΔARC |
| R32 | mass% | R404A | 25.0 | 21.5 | 15.0 | 25.0 | 25.0 | 15.0 | 15.0 |
| R1123 | mass% | | 10.0 | 11.5 | 20.0 | 20.0 | 2.5 | 30.0 | 10.0 |
| R1234yf | mass% | | 65.0 | 67.0 | 65.0 | 55.0 | 72.5 | 55.0 | 75.0 |
| GWP | years | 3922 | 171 | 148 | 104 | 171 | 172 | 104 | 104 |
| Relative COP | % | 100.0 | 106.5 | 105.9 | 103.5 | 104.3 | 108.1 | 101.4 | 105.7 |
| Relative refrigerating capacity | % | 100.0 | 104.3 | 100.1 | 98.7 | 116.3 | 95.5 | 110.7 | 87.3 |
| Relative discharge pressure | % | 100.0 | 100.6 | 98.5 | 100.5 | 111.7 | 92.2 | 111.8 | 89.2 |

As shown in Tables 6-10, the compositions of the Examples not only have (1) low GWP, but also have (2) COP, refrigerating capacity, and compressor outlet pressure (discharge pressure) that are all substantially equivalent to those of R404A. These compositions are thus found to have comprehensively excellent properties required of alternative refrigerants for R404A.

## Claims

1. A composition comprising a refrigerant comprising difluoromethane (R32), trifluoroethylene (R1123), and 2,3,3,3-tetrafluoropropene (R1234yf),
wherein the three components have a mass ratio that falls within a region surrounded by lines a, c, and d, which connect points A, B and C in a ternary composition diagram of Fig. 1 whose vertices represent the three components:
A: (R32/R1123/R1234yf = 25.6/13.4/61.0 mass%);
B: (R32/R1123/R1234yf = 25.6/3.4/71.0 mass%); and
C: (R32/R1123/R1234yf = 3.9/36.5/59.6 mass%).

2. The composition of claim 1, wherein the three components have a mass ratio that falls within a region surrounded by lines a, c, and e, which connect points D, B and E in a ternary composition diagram of Fig. 2 whose vertices represent the three components:
D: (R32/R1123/R1234yf = 25.6/11.0/63.4 mass%);
B: (R32/R1123/R1234yf = 25.6/3.4/71.0 mass%); and
E: (R32/R1123/R1234yf = 9.0/28.3/62.7 mass%).

3. The composition of claim 1 or 2, wherein the three components have a mass ratio that falls within a region surrounded by lines b, c, and e, which connect points F, G and E in a ternary composition diagram of Fig. 3 whose vertices represent the three components:
F: (R32/R1123/R1234yf = 21.8/14.7/63.5 mass%);
G: (R32/R1123/R1234yf = 21.8/8.8/69.4 mass%); and
E: (R32/R1123/R1234yf = 9.0/28.3/62.7 mass%).

4. The composition of any of claims 1-3, wherein the refrigerant comprises R32, R1123, and R1234yf in a total amount of ≥ 99.5 mass-%, based on the entire refrigerant.

5. The composition of any of claims 1-3, wherein the refrigerant consists of R32, R1123, and R1234yf.

6. The composition of any of claims 1-5, further comprising water.

7. The composition of any of claims 1-6, further comprising a refrigerant oil.

8. The composition of any of claims 1-7, further comprising at least one additive selected from tracers, compatibilizing agents, ultraviolet fluorescent dyes, stabilizers, and polymerization inhibitors.

9. The use of the composition of any of claims 1-8 as a refrigerant.

10. The use of claim 9 wherein the composition of any of claims 1-8 is used as an alternative refrigerant for R404A.

11. A refrigeration method comprising operating a refrigeration cycle using the composition of any of claims 1-8.

12. A refrigerating machine comprising the composition of any one of claims 1-8.

13. The refrigerating machine of claim 12, which comprises a heat exchanger in which the refrigerant flows countercurrent to the flow of an external heat medium.

## Patentansprüche

1. Zusammensetzung, umfassend ein Kühlmittel, das Difluormethan (R32), Trifluorethylen (R1123) und 2,3,3,3-Tetrafluorpropen (R1234yf) umfasst,
worin die drei Komponenten ein Massenverhältnis aufweisen, das in einen Bereich fällt, der von den Linien a, c und d umgeben ist, die die Punkte A, B und C in einem ternären Zusammensetzungsdiagramm von Abb. 1 verbinden, dessen Eckpunkte die drei Komponenten darstellen:
A: (R32/R1123/R1234yf = 25,6/13,4/61,0 Massen-%);
B: (R32/R1123/R1234yf = 25,6/3,4/71,0 Massen-%); und
C: (R32/R1123/R1234yf = 3,9/36,5/59,6 Massen-%).

2. Zusammensetzung gemäß Anspruch 1, worin die drei Komponenten ein Massenverhältnis aufweisen, das in einen Bereich fällt, der von den Linien a, c und e umgeben ist, die die Punkte D, B und E in einem ternären Zusammensetzungsdiagramm von Abb. 2 verbinden, dessen Eckpunkte die drei Komponenten darstellen:
D: (R32/R1123/R1234yf = 25,6/11,0/63,4 Massen-%);
B: (R32/R1123/R1234yf = 25,6/3,4/71,0 Massen-%); und
E: (R32/R1123/R1234yf = 9,0/28,3/62,7 Massen-%).

3. Zusammensetzung gemäß Anspruch 1 oder 2, worin die drei Komponenten ein Massenverhältnis aufweisen, das in einen Bereich fällt, der von den Linien b, c und e umgeben ist, die die Punkte F, G und E in einem ternären Zusammensetzungsdiagramm von Abb. 3 verbinden, dessen Eckpunkte die drei Komponenten darstellen:
F: (R32/R1123/R1234yf = 21,8/14,7/63,5 Massen-%);
G: (R32/R1123/R1234yf = 21,8/8,8/69,4 Massen-%); und
E: (R32/R1123/R1234yf = 9,0/28,3/62,7 Massen-%).

4. Zusammensetzung gemäß einem der Ansprüche 1-3, worin das Kühlmittel R32, R1123 und R1234yf in einer Gesamtmenge von ≥ 99,5 Massen-%, basierend auf dem ganzen Kühlmittel, umfasst.

5. Zusammensetzung gemäß einem der Ansprüche 1-3, worin das Kühlmittel aus R32, R1123 und R1234yf besteht.

6. Zusammensetzung gemäß einem der Ansprüche 1-5, ferner umfassend Wasser.

7. Zusammensetzung gemäß einem der Ansprüche 1-6, ferner umfassend ein Kühlmittelöl.

8. Zusammensetzung gemäß einem der Ansprüche 1-7, ferner umfassend mindestens ein Additiv, ausgewählt aus Tracern, Kompatibilisierungsmitteln, UV-Fluoreszenzfarbstoffen, Stabilisatoren und Polymerisationsinhibitoren.

9. Verwendung der Zusammensetzung gemäß einem der Ansprüche 1-8 als Kühlmittel.

10. Verwendung gemäß Anspruch 9, worin die Zusammensetzung gemäß einem der Ansprüche 1-8 als alternatives Kühlmittel für R404A verwendet wird.

11. Kühlverfahren, umfassend das Betreiben eines Kühlkreislaufes unter Verwendung der Zusammensetzung gemäß einem der Ansprüche 1-8.

12. Kühlmaschine, umfassend die Zusammensetzung gemäß einem der Ansprüche 1-8.

13. Kühlmaschine gemäß Anspruch 12, das einen Wärmetauscher umfasst, in dem das Kühlmittel im Gegenstrom zum Strom eines externen Wärmemediums strömt.

## Revendications

1. Composition comprenant un fluide frigorigène comprenant du difluorométhane (R32), du trifluoroéthylène (R1123) et du 2,3,3,3-tétrafluoropropène (R1234yf),
dans laquelle les trois composants présentant un rapport massique qui se situe dans une région entourée des lignes a, c et d, qui relient les points A, B et C sur un diagramme de composition ternaire de la Fig. 1 dont les sommets représentent les trois composants :
A : (R32/R1123/R1234yf = 25,6/13,4/61,0 % en masse) ;
B : (R32/R1123/R1234yf = 25,6/3,4/71,0 % en masse) ; et
C : (R32/R1123/R1234yf = 3,9/36,5/59,6 % en masse).

2. Composition selon la revendication 1, dans laquelle les trois composants présentent un rapport massique qui se situe dans une région entourée des lignes a, c et e, qui relient les points D, B et E sur un diagramme de composition ternaire de la Fig. 2 dont les sommets représentent les trois composants :
D : (R32/R1123/R1234yf = 25,6/11,0/63,4 % en masse) ;
B : (R32/R1123/R1234yf = 25,6/3,4/71,0 % en masse) ; et
E : (R32/R1123/R1234yf = 9,0/28,3/62,7 % en masse).

3. Composition selon la revendication 1 ou la revendication 2, dans laquelle les trois composants présentent un rapport massique qui se situe dans une région entourée des lignes b, c et e, qui relient les points F, G et E sur un diagramme de composition ternaire de la Fig. 3 dont les sommets représentent les trois composants :
F : (R32/R1123/R1234yf = 21,8/14,7/63,5 % en masse) ;
G : (R32/R1123/R1234yf = 21,8/8,8/69,4 % en masse) ; et
E : (R32/R1123/R1234yf = 9,0/28,3/62,7 % en masse).

4. Composition selon l'une quelconque des revendications 1 à 3, dans laquelle le fluide frigorigène comprend R32, R1123 et R1234yf en une quantité totale ≥ 99,5 % en masse, sur la base de la totalité du fluide frigorigène.

5. Composition selon l'une quelconque des revendications 1 à 3, dans laquelle le fluide frigorigène consiste en R32, R1123 et R1234yf.

6. Composition selon l'une quelconque des revendications 1 à 5, comprenant en outre de l'eau.

7. Composition selon l'une quelconque des revendications 1 à 6, comprenant en outre une huile frigorigène.

8. Composition selon l'une quelconque des revendications 1 à 7, comprenant en outre au moins un additif sélectionné parmi des traceurs, des agents compatibilisants, des colorants fluorescents ultraviolets, des stabilisants et des inhibiteurs de polymérisation.

9. Utilisation de la composition selon l'une quelconque des revendications 1 à 8 comme fluide frigorigène.

10. Utilisation selon la revendication 9 dans laquelle la composition selon l'une quelconque des revendications 1 à 8 est utilisée comme fluide frigorigène alternatif pour du R404A.

11. Procédé de réfrigération comprenant la mise en oeuvre d'un cycle de réfrigération en utilisant la composition selon l'une quelconque des revendications 1 à 8.

12. Machine frigorifique comprenant la composition selon l'une quelconque des revendications 1 à 8.

13. Machine frigorifique selon la revendication 12, qui comprend un échangeur de chaleur dans lequel le fluide frigorigène s'écoule à contre-courant par rapport à l'écoulement d'un milieu caloporteur externe.
